Europäisches Patentamt

European Patent Office

Office européen des brevets

(19)

(11) Numéro de publication: **0 397 862**

**A1**

(12)

# DEMANDE DE BREVET EUROPEEN PUBLI E EN APPLICATION DE L'article 158, paragraphe 3 de la CBE

(21) Numéro de dépôt: 89900679.5

(22) Date de dépôt: **23.09.88**

(86) Numéro de dépôt internationale :
PCT/SU88/00187

(87) Numéro de publication internationale :
**WO 90/03344 (05.04.90 90/08)**

(51) Int. Cl.⁵: **C04B 22/08, C04B 22/14**

(43) Date de publication de la demande:
**22.11.90 Bulletin 90/47**

(84) Etats contractants désignés:
**DE FR IT NL SE**

(71) Demandeur: **KAZAKHSKY KHIMIKO-TEKHNOLOGICHESKY INSTITUT**
**Kommunistichesky pr. 5**
**Chimkent, 486018(SU)**

(72) Inventeur: **LERKE, Pavel Pavlovich**
**ul. Lugovaya, 4**
**Chimkent, 486009(SU)**
Inventeur: **PARIMBETOV, Berkimbai**
**ul. Baiseitovoi, 40-64**
**Alma-Ata, 480100(SU)**
Inventeur: **VERNER, Vladimir Fedorovich**
**ul. Rubinshteina, 54a-10**
**Chimkent, 486042(SU)**
Inventeur: **SHNAIDER, Valery Vasilievich**

**mikroraion 17, 20-58**
**Chimkent, 486035(SU)**
Inventeur: **BAIDUISENOV, Shakhaidar Seilbekovich**
**ul. Dzhandosova, 21-63**
**Alma-Ata, 480132(SU)**
Inventeur: **VOLOZHIN, Leonid Matveevich**
**ul. K.Marxa, 9-27**
**Chimkent, 486050(SU)**
Inventeur: **RYZHOV, Boris Grigorievich**
**ul. Sovetskaya, 32a-3**
**Chimkent, 486050(SU)**
Inventeur: **MALKOV, Nikolai Ivanovich**
**ul. Iliicha, 4/5-8**
**Chimkent, 486031(SU)**

(74) Mandataire: **Durand, Yves Armand Louis et al**
**CABINET WEINSTEIN 20, Avenue de**
**Friedland**
**F-75008 Paris(FR)**

(54) **MELANGE DE MATIERE BRUTE POUR OBTENIR UN ADDITIF MINERAL ACTIF POUR DU CIMENT.**

(57) Un additif minéral actif pour des matériaux de cimentation comprend, exprimé en poids, 94 à 98 % de laitier phosphoreux granulé et 2 à 6 % d'un composant contenant du sulfate composé d'un mélange exprimé en poids, de 47,2 à 57,6 % de sulfate neutre de sodium, 40,5 à 51,1 % de sulfate de magnésium, et 1,7 à 1,9 % de rhodonite de sodium.

- 1 -

"Mélange en matières de départ pour l'obtention d'un
additif minéral actif pour le ciment".

Domaine de l'invention

La présente invention concerne la fabrication de
matériaux de liaison, et vise plus précisément un
additif minéral actif pour des matériaux de liaison.

Etat de la technique

Il est connu de fabriquer des ciments en utilisant,
outre le clinker du ciment portland et le gypse, des
additifs minéraux actifs, dont la part relative massique
varie entre 5 et 60 % en masse. L'incorporation au
ciment d'additifs minéraux actifs permet de réduire le
prix de revient du ciment, et aussi, dans certains cas,
influe sur les qualités technologiques du ciment, qui
ont de l'importance pour le bâtiement (par exemple, la
cinétique de durcissement du ciment, le dégagement de
chaleur, la durée de la prise, la résistance aux
sulfates).

En tant qu'additif minéral actif, on peut utiliser dans
la fabrication du ciment aussi bien des additifs
artificiels que des additifs minéraux naturels. Parmi
ces derniers, on peut citer la diatomite, le tripoli, la
gaize, l'argile cuite naturelle, les éclats de marbre.
Dans les additifs minéraux artificiels sont classés les
laitiers de hauts fourneaux et les laitiers phosphorés.

Les additifs minéraux naturels ont une faible blancheur
et une activité hydraulique basse, qui se répercutent
fâcheusement sur la blancheur du ciment portland et ses
qualités technologiques.

On connaît un additif actif qui est un mélange ayant

- 2 -

subi un traitement thermique à une température de 1350 à 1450°C et constitué d'un laitier phosphoré (92 à 99 % en masse) et de sulfate de sodium (1 à 8 % en masse) (SU, A, 893925). Le coefficient de blancheur d'un tel additif minéral actif, d'après l'échelle absolue, est nettement supérieur à celui des additifs minéraux naturels et se chiffre de 89 à 93 %, alors que l'activité hydraulique de l'additif déterminée d'après la quantité de la chaux absorbée par l'additif pendant 15 titrages, constitue 22,9 à 23,8 mg.

On connaît également un additif minéral actif constitué d'un laitier phosphoré de sulfate de sodium et de sulfate de magnésium soumis à fusion à une température de 1350 à 1450°C.

La mise en oeuvre dudit additif minéral ne permet pas d'accroître notablement la blancheur et l'activité hydraulique du ciment.

Exposé de l'invention

L'invention se propose, par voie de modification de la structure, de fournir un additif minéral actif assurant un accroissement de la blancheur et de l'activité hydraulique du ciment obtenu à partir d'un tel additif.

La meilleure variante de réalisation

Le problème ainsi posé est résolu avec un aditif minéral actif pour des matériaux de liaison, qui contient un laitier phosphoré granulé et un ingrédient sulfaté, additif qui, conformément à l'invention, contient en tant qu'ingrédient sulfaté un mélange constitué de 47,2 à 57,6 % en masse de sulfate de sodium, de 40,5 à 51,1 % en masse de sulfate de magnésium, de 1,70 à 1,90 % en masse de rhodonite de sodium, le rapport entre les constituants de l'additif minéral étant le suivant :

laitier phosphoré : 94 à 98 % en masse
mélange sulfaté   :  2 à  6 % en masse

Grâce à l'invention, l'additif actif minéral à un coefficient de blancheur de 96 à 100 % à l'échelle absolue, et une activité hydraulique comprise entre 24,14 et 24,97 mg, déterminée d'après l'absorption de Ca(OH)$_2$ dans une solution de chaux à l'issue de 15 titrages.

D'autres caractéristiques et avantages de l'invention seront mieux compris à la lecture de la description qui va suivre de l'additif minéral actif et des exemples de sa préparation et de son utilisation.

L'additif minéral actif pour le ciment est, selon l'invention, un mélange constitué de 94 à 98 % en masse d'un laitier phosphoré granulé et de 2 à 6 % en masse d'un mélange sulfaté, constitué de sulfate de sodium (47,2 à 57,6 % en masse), de sulfate de magnésium (40,5 à 51,1 en masse) et de rhodonite de sodium (1,7 à 1,9 % en masse).

Le laitier phosphoré, qui est le principal constituant de l'additif minéral où il entre pour 94 à 98 % en masse, provient de la fabrication du phosphore jaune par voie électrothermique.

Du point de vue de la composition chimique, le laitier phosphoré est généralement constitué de 38 à 45 % en masse d'oxyde de silicium, de 2 à 5 % en masse d'oxyde d'aluminium, de 0,1 à 0,5 % en masse d'oxyde ferrique, de 38 à 52 % en masse d'oxyde de calcium, de 2 à 5 % en

- 4 -

masse d'oxyde de magnésium, de 0,5 à 3,0 % en masse d'oxyde de phosphore, de 1 à 3 % en masse de fluor, de 0,1 à 0,3 % en masse d'oxyde de manganèse, de 3,0 à 5,0 % en masse de phosphures de fer, de manganèse et de calcium.

Du point de vue de la composition minéralogique, le laitier phosphoré granulé est constitué de 80 à 85 % en masse d'une phase vitreuse ayant une composition rappelant la wollastonite, de 7 à 10 % en masse de wollastonite, de 5 à 7 % en masse de mélilite, de 3 à 5 % d'okermanite. A l'état cristallisé, le laitier phosphoré est constitué de 60 à 70 % en masse de wollastonite, de 20 à 30 % en masse de mélilite, de 10 à 15 % en masse d'okermanite et de 10 à 20 % en masse de cuspidine.

L'ingrédient sulfaté de l'additif minéral actif est, selon l'invention, constitué de 47,2 à 57,6 % en masse de sulfate de sodium, de 40,5 à 51,1 % en masse de sulfate de magnésium et de 1,7 à 1,9 % en masse de rhodonite de sodium.

L'ingrédient sulfaté de ladite composition utilisable, selon l'invention, pour préparer un additif minéral actif, peut être obtenu tant par mélange de ses constituants énumérés que par neutralisation des eaux usées provenant de la fabrication des fibres de polyacrylonitrile.

L'additif minéral actif selon l'invention pour des matériaux de liaison peut être obtenu soit en introduisant ledit ingrédient sulfaté dans du laitier phosphoré fondu, en mélangeant ensuite la composition qui en résulte et en l'introduisant dans de l'eau, soit en mélangeant lesdits constituants de l'additif, en

- 5 -

faisant fondre la composition qui en résulte à une
température de 1400 à 1700°C et en introduisant la
matière ainsi fondue dans de l'eau.

Les sulfates de sodium et de magnésium contenus dans
l'ingrédient sulfaté réagissent avec les sulfures et les
phosphures de fer et de manganèse présents dans le
laitier phosphoré pour donner des composés faiblement
colorés ou incolores et accroître ainsi la blancheur du
laitier.

Si la teneur en sulfates de magnésium et de sodium dans
l'ingrédient sulfaté est inférieure à la limite
indiquée, la réaction avec lesdits sulfures et
phosphures du laitier phosphoré ne sera pas complète et
ne donnera pas l'effet escompté.

L'augmentation de la teneur en sulfates de magnésium et
de sodium dans l'ingrédient sulfaté au-delà de la limite
indiquée est inutile, car elle n'entraîne pas
l'accroissement du coefficient de blancheur.

La rhodonite de sodium contenue dans l'ingrédient
sulfaté réagit sur les sulfures de métaux contenus dans
le laitier phosphoré et forme des composés faiblement
colorés et facilement volatils : la rhodonite de fer et
la rhodonite de manganèse. L'accroissement de la
blancheur du laitier qui en résulte est dû non seulement
à la formation des rhodonites de fer et de manganèse
faiblement colorées, mais encore au fait que la
rhodonite de sodium est susceptible, à une température
de 1400 à 1700°C, de catalyser la réaction entre les
sulfures du laitier et les sulfates de sodium et de
magnésium.

L'accroissement de l'activité hydraulique de l'additif

- 6 -

minéral actif selon l'invention s'explique par le fait que, sous l'effet de l'anion de la rhodonite de sodium, il y a dispersion des complexes - Si - O - Si - au sein du laitier phosphoré, d'où l'hydratation accélérée du laitier phosphoré.

On a établi par voie expérimentale que la mise en oeuvre du mélange sulfaté dans une proportion supérieure à 6 % en masse était inutile, car il ne se produisait pas de nouvel accroissement de la blancheur de l'additif, mais le mélange sulfaté altère alors la fixité des couleurs de l'additif finalement obtenu.

Quand on met en oeuvre le mélange sulfaté dans une proportion inférieure à 2 % en masse, il ne se produit pas une oxydation suffisante des sulfures de métaux. En outre, en présence de moins de 2 % en masse de l'ingrédient sulfaté, il se forme une faible quantité de composés faiblement colorés et facilement volatils, les rhodonites de métaux, ce qui provoque une diminution de la blancheur de l'additif minéral.

L'additif minéral actif selon l'invention a un coefficient de blancheur de 96 à 100 % à l'échelle absolue, et une activité hydraulique comprise entre 24,14 et 24,97 mg, déterminée d'après l'absorption de $Ca(OH)_2$ dans une solution de chaux après 15 titrages.

L'additif minéral actif selon l'invention permet d'améliorer la qualité de matériaux de liaison blancs et décoratifs et de réduire le prix de revient de leur fabrication.

Pour mieux faire comprendre l'invention, on donne ci-après les exemples non limitatifs suivants de sa réalisation.

- 7 -

Exemple 1

Un laitier phosphoré granulé, engagé en une quantité de 98 kg, et un ingrédient sulfaté, qui est un mélange constitué de 47,2 % en masse de sulfate de sodium, de 51,1 % en masse de sulfate de magnésium, de 1,7 % en masse de rhodonite de sodium, engagé en quantité de 2 kg, sont mélangés puis fondus ensemble à une température de 1400 à 1470°C.

On maintient pendant 30 minutes la matière fondue ainsi obtenue puis on la verse dans de l'eau.

L'additif minéral actif qui en résulte a un coefficient de blancheur de 96 %. L'activité hydraulique de l'additif obtenu, déterminée d'après l'absorption de $Ca(OH)_2$ dans une solution de chaux après 15 titrages, est de 24,6 mg.

A base de l'additif minéral actif obtenu (10 % en masse), d'un clinker de ciment portland blanc (85 % en masse) et de gypse (5 % en masse), on obtient, par mouture conjointe desdits constituants, des matériaux de liaison présentant une résistance à la compression de 975 $kgf/cm^2$ (après 7 jours de durcissement).

Exemple 2

En procédant comme dans l'exemple 1, on obtient l'additif minéral actif à partir d'un laitier phosphoré granulé, engagé en une quantité de 96,78 kg, et d'un ingrédient sulfaté, qui est un mélange constitué de 57,6 % en masse de sulfate de sodium, de 40,5 % en masse de sulfate de magnésium et de 1,9 % en masse de rhodonite de sodium, engagé en une quantité de 3,22 kg. Le coefficient de blancheur de l'additif obtenu est de

- 8 -

96 %. L'activité hydraulique de l'additif obtenu, déterminée d'après l'absorption de $Ca(OH)_2$ dans une solution de chaux après 15 titrages, est de 24,7 mg.

A base de l'additif minéral actif obtenu (20 % en masse), d'un clinker de ciment protland blanc (75 % en masse) et de gypse (5 % en masse), on obtient, par mouture conjointe desdits constituants, des matériaux de liaison présentant une résistance à la compression de 95 $kgf/cm^2$ (après 7 jours de durcissement).

Exemple 3

En procédant comme dans l'exemple 1, on obtient l'additif minéral actif à partir d'un laitier phosphoré granulé, engagé en une quantité de 95,43 kg, et d'un ingrédient sulfaté, qui est un mélange constitué de 51,3 % en masse de sulfate de sodium, de 46,9 % en masse de sulfate de magnésium et de 1,8 % en masse de rhodonite de sodium, engagé en une quantité de 4,57 kg. Le coefficient de blancheur de l'additif obtenu est de 99 %. L'activité hydraulique de l'additif obtenu est de 24,97 mg.

A base de l'additif minéral actif obtenu (30 % en masse), d'un clinker de ciment portland blanc (65 % en masse) et de gypse (5 % en masse), on obtient, par mouture conjointe desdits constituants, un matériau de liaison présentant une résistance à la compression de 830 $kgf/cm^2$ (après 7 jours de durcissement).

Exemple 4

Dans un laitier phosphoré fondu, engagé en une quantité de 94,69 kg, on introduit, à une température de 1400 à 1470°C, 5,31 kg d'un ingrédient sulfaté qui est un

- 9 -

mélange analogue à celui de l'exemple 1.

On homogénéise la matière en fusion et on la maintient pendant 5 à 10 mn. On verse ensuite la matière fondue dans de l'eau.

La blancheur de l'additif minéral actif ainsi obtenu est de 99 %. L'activité hydraulique, déterminée d'après l'absorption de $Ca(OH)_2$ dans la solution de chaux après 15 titrages, est de 24,9 mg.

A base de l'additif minéral actif obtenu (40 % en masse), d'un clinker de ciment portland blanc (55 % en masse) et de gypse (5 % en masse), on obtient, par mouture conjointe desdits constituants, un matériau de liaison présentant une résistance à la compression de 713 kgf/cm$^2$ (après 7 jours de durcissement).

Exemple 5

En procédant comme dans l'exemple 1, on obtient l'additif minéral actif à partir d'un laitier phosphoré granulé, engagé en une quantité de 94 kg, et d'un ingrédient sulfaté ayant une composition analogue à celle de l'exemple 2 et engagé en quantité de 6 kg.

Le coefficient de blancheur de l'additif obtenu est de 100 %. L'activité hydraulique de l'additif, déterminée d'après l'absorption de $Ca(OH)_2$ dans la solution de chaux après 15 titrages, est de 24,14 mg.

Le matériau de liaison obtenu dans les conditions analogues à celles de l'exemple 3 présente une résistance à la compression égale à 830 kgf/cm$^2$ (après 7 jours de durcissement).

- 10 -

Application industrielle

L'invention trouvera des applications dans la fabrication des ciments, le ciment portland blanc et coloré, utilisé pour le finissage d'édifices et d'ouvrages, le ciment portland contenant des additifs minéraux, le ciment portland de laitier, ainsi que des liants à base de laitiers, présentant des qualités améliorées.

En outre, l'invention trouvera des applications dans la fabrication de produits céramiques et de matériaux en verre cristallin, présentant des qualités spéciales.

Bien entendu, diverses modifications peuvent être apportées par l'homme de l'art à l'additif qui vient d'être décrit uniquement à titre d'exemples non limitatifs sans sortir du cadre de l'invention.

- 11 -

Revendication

Additif minéral actif pour des matériaux de liaison, contenant un laitier phosphoré granulé et un ingrédient sulfaté, caractérisé en ce qu'il contient, en tant qu'ingrédient sulfaté, un mélange constitué de 47,2 à 57,6 % en masse de sulfate de sodium, de 40,5 à 51,1 % en masse de sulfate de magnésium, de 1,70 à 1,90 % en masse de rhodonite de sodium, le rapport massique entre les constituants de l'additif minéral étant le suivant, en % en masse :

| | |
|---|---|
| laitier phosphoré | 94 à 98 |
| mélange sulfaté | 2 à 6 |

# INTERNATIONAL SEARCH REPORT

International Application No PCT/SU 88/00187

## I. CLASSIFICATION OF SUBJECT MATTER (if several classification symbols apply, indicate all) [6]

According to International Patent Classification (IPC) or to both National Classification and IPC

IPC[4]    C04B 22/08, 22/14

## II. FIELDS SEARCHED

### Minimum Documentation Searched [7]

| Classification System | Classification Symbols |
|---|---|
| IPC[4] | C04B 22/08, 22/14, 7/14 - 7/153 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 893925 (Kazakhsky khimiko-tekhnologichesky institut) 2 January 1982 (02.01.82) see the claims (cited in the description) | 1 |
| A | SU, A1, 920020 (Kazakhsky khimiko-tekhnologichesky institut) 15 April 1982 (15.04.82) see the claims | 1 |
| A | GB, B, 1159373 (KNAPSAGK AKTIENGESELLSCHAFT) 23 July 1969 (23.07.69) see the claims | 1 |
| A | DE, C1, 2953652 (JAPAN PROCESS ENGINEERING CO.LTD) 28 May 1986 (28.05.86) see the claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 26 April 1989 (26.04.89) | 12 June 1989 (12.06-89) |

| International Searching Authority | Signature of Authorized Officer |
|---|---|
| ISA/SU | |

Form PCT/ISA/210 (second sheet) (January 1985)